# EUROPÄISCHE PATENTSCHRIFT

(11) **EP 1 669 173 B1**
(45) Veröffentlichungstag und Bekanntmachung des Hinweises auf die Patenterteilung: **20.02.2008**
(21) Anmeldenummer: 05108298.0
(22) Anmeldetag: 09.09.2005
(51) Int. Cl.: B25J 21/00

(54) **Schutzraum für eine einen Roboterarm aufweisende Montageeinrichtung**
Safety cell for a mounting installation comprising a robot arm
Cellule de sécurité pour une installation de montage comprenant un bras de robot

(30) Priorität: 23.10.2004 DE 102004051753
(43) Veröffentlichungstag der Anmeldung: 14.06.2006
(73) Patentinhaber: Robert Bosch GmbH, 70442 Stuttgart (DE)
(72) Erfinder: Braun, Thomas, 70736 Fellbach (DE); Dallinger, Frank, 70499 Stuttgart (DE); Kramer, Bernd, 71735 Eberdingen-Hochdorf (DE)

(56) Entgegenhaltungen:
- EP-A- 0 517 003
- DE-A1- 3 040 467

## Beschreibung

### Stand der Technik

Die Erfindung betrifft einen Schutzraum für eine einen Roboterarm aufweisende Montageeinrichtung nach dem Oberbegriff des Anspruchs 1.

Ein derartiger Schutzraum ist zum Beispiel aus der EP-A-0 517 003 bekannt.

Derartige Schutzräume haben eine Sicherungseinrichtung, die verhindert, dass der Roboterarm bei Betriebsstörungen bis in einen Bereich außerhalb des Schutzraumes ausschwenken kann und dort befindliche Personen oder Anlagen gefährdet. Bekannt sind Schutzeinrichtungen beispielsweise in Form von Lichtschranken oder Endschalter, welche den Strom an dem Roboter unterbrechen, sobald der Roboterarm eine bestimmte Stellung innerhalb des Schutzraumes erreicht hat. Derartige Schutzeinrichtungen bedeuten einen nicht unerheblichen zusätzlichen Aufwand und sind für sich genommen wiederum störanfällig.

Aufgabe er Erfindung ist es daher, den bekannten Schutzraum für eine einen Roboterarm aufweisende Montageeinrichtung derart weiterzubilden, dass mit relativ geringem Aufwand sichergestellt werden kann, dass der Roboterarm bei Betriebsstörungen außerhalb des Schutzraumes befindliche Personen oder Anlagen nicht gefährdet.

Vorteile der Erfindung

Der erfindungsgemäße Schutzraum für eine einen Roboterarm aufweisende Montageeinrichtung mit den Merkmalen des Anspruchs 1 hat den Vorteil, dass mit einfachsten konstruktiven Maßnahmen eine Gefährdung von außerhalb des Schutzraumes angeordneten Personen oder Anlagen ausgeschlossen wird. Dies wird erfindungsgemäß im wesentlichen auf rein mechanische Art und Weise durch eine spezielle Anordnung der Schutzscheiben in Verbindung mit einer Dichtung für die Schutzscheiben erzielt, die bei Betriebsstörungen die vom Roboterarm auf die Schutzscheiben ausgeübte mechanische Energie absorbieren.

Weiterbildungen des erfindungsgemäßen Schutzraums für eine einen Roboterarm aufweisende Montageeinrichtung sind in den Unteransprüchen angegeben. Um bei herkömmlichen Türverschließelementen ein Aufspringen des Türelements zu verhindern, wenn der Roboterarm auf das Türelement trifft, ist es in einer vorteilhaften Weiterbildung vorgesehen, eine außen angeordnete Strebe vorzusehen, welche das Türelement mechanisch blockiert.

### Zeichnung

Ein Ausführungsbeispiel der Erfindung ist in der Zeichnung dargestellt und wird nachfolgend näher erläutert. Es zeigen:
Figur 1 eine Montageeinrichtung mit einem Roboterarm in einer vereinfachten perspektivischen Ansicht und
Figur 2 einen Schnitt durch den oberen Bereich der Montageeinrichtung der Figur 1 im Bereich einer Schutzscheibe.

### Beschreibung des Ausführungsbeispiels

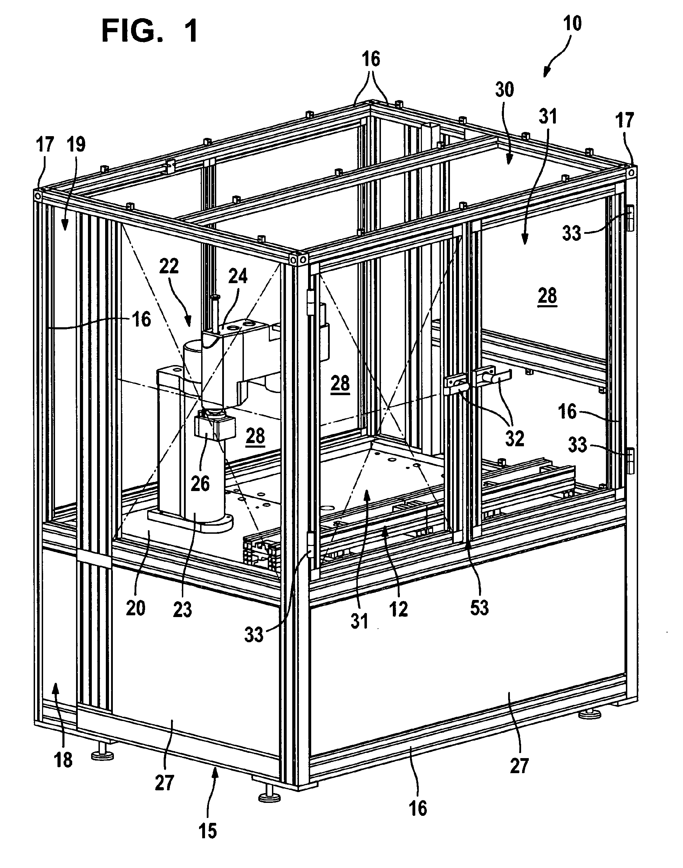

In der Figur 1 ist eine Montageeinrichtung 10 in Form einer sogenannten Montagezelle dargestellt. Die Montageeinrichtung 10 ist Bestandteil einer größeren, nicht dargestellten Fertigungsanlage, welche beispielsweise eine Vielzahl von Montagezellen aufweist. Die Verbindung zwischen den einzelnen Montagezellen erfolgt mittels eines an sich bekannten Werkstückträgertransportsystems, dessen Transportbahn 12 geradlinig durch die Montageeinrichtung 10 verläuft.

Die Montageeinrichtung 10 weist ein würfel- bzw. kastenförmiges, als Schutzraum dienendes Gehäuse 15 auf, dessen äußere Begrenzung insbesondere von aus Aluminium im Strangpressverfahren hergestellten Profilstäben 16 gebildet ist. Die einzelnen Profilstäbe 16 sind an ihren Eck- bzw. Knotenpunkten mittels sogenannten Eckverbindern 17 über nicht näher dargestellte Verschraubungen miteinander fest verbunden.

Die Montageeinrichtung 10 ist in einer horizontalen Ebene unterteilt in einen unteren Bereich 18, in dem insbesondere Antriebsaggregate bzw. elektrische und/oder pneumatische Versorgungseinrichtungen untergebracht sind, und einen oberen Bereich 19, in dem der eigentliche Montageprozess stattfindet. Die Trennung der beiden Bereiche 18, 19 erfolgt mittels einer horizontal angeordneten Tischplatte 20.

Aus der Tischplatte 20 ragt ein Teil eines Montageroboters 22 heraus. Der Montageroboter 22 weist eine mit der Tischplatte 20 fest verbundene Säule 23 auf, an der ein schwenk-, dreh-, heb- und senkbarer Roboterarm 24 befestigt ist. Der Roboterarm 24 trägt an seinem von der Säule 23 abgewandten Ende beispielsweise eine Handhabungseinrichtung 26, mit der er in die Montageeinrichtung 10 über die Transportbahn 12 zugeförderte Werkstücke beispielsweise mit zusätzlichen Bauteilen bestücken kann. Wesentlich ist, dass zumindest Teile des Roboterarms 24 einen derartigen Bewegungsradius aufweisen, dass sie zumindest bereichsweise bis außerhalb des Gehäuses 15 ausgelenkt werden können, sofern keine, wie nachfolgend näher beschriebenen Schutzmaßnahmen vorhanden wären.

Im Normalbetrieb der Montageeinrichtung 10 sind derartige Betriebszustände des Montageroboters 22 ausgeschlossen, da dieser infolge seines programmierten Steuer- bzw. Bewegungsprogramms mit seinem Roboterarm 24 nur Punkte innerhalb des Gehäuses 15 anfährt.

Das Gehäuse 15 ist in seinem unteren Bereich 18 mittels plattenförmigen Seitenwänden 27 verschlossen, wohingegen im oberen Bereich 19 Schutzscheiben 28 der Abgrenzung des Gehäuses 15 nach außen hin dienen. Im Bereich der Transportbahn 12 können die Schutzscheiben 28 Aussparungen bzw. Durchbrüche aufweisen. Der Deckenbereich 30 des Gehäuses 15 kann hingegen offen ausgebildet bzw. gestaltet sein. Ferner sind an der einen Seitenwand des Gehäuses 15 zwei zusätzliche, nach außen zu öffnende Türen 31 angeordnet, welche mittels eines üblichen Schlosses bzw. Verriegelungsmechanismus 32 und randseitig angeordneten Scharnieren 33 am Gehäuse 15 befestigt und angelenkt ist.

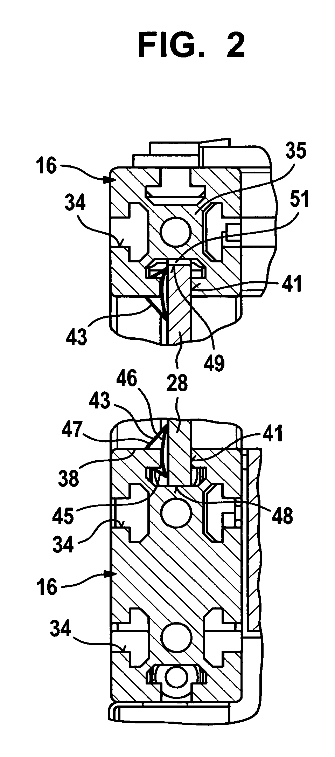

Wie insbesondere aus der Figur 2 erkennbar ist, weisen die Profilstäbe 16 an ihren Längsflächen jeweils wenigstens eine Ausnehmung 34 auf, die zur Aufnahme der Seitenwände 27 bzw. der Schutzscheiben 28 dienen. Derartige Profilstäbe 16 sind aus der Praxis bereits allgemein bekannt.

In die eine Ausnehmung 34 des jeweiligen Profilstabes 16 der Figur 2 ist eine Schutzscheibe 28 eingesetzt, welche auf der dem Roboterarm 24 zugewandten Seitenfläche 41 der Ausnehmung 34 anliegt. Auf der dem Roboterarm 24 abgewandten, das heißt auf der gehäuseäußeren Seite der Schutzscheibe 28 ist hingegen jeweils eine längliche Profildichtung 43 angeordnet. Die Profildichtung 43 ist als halbstarre Dichtung ausgebildet und weist einen innerhalb der Ausnehmung 34 angeordneten Abschnitt 45 auf. Ein weiterer Abschnitt 46 der Profildichtung 43 schmiegt sich an die Schutzscheibe 28 an, während ein dritter Abschnitt 47 auf einer der Profillängsaußenkanten 38 aufliegt.

Beim Montieren der vorzugsweise über die jeweils gesamte Länge der (horizontalen und vertikalen) Profilstäbe 16 verlaufenden Profildichtung 43 am Profilstab 16 wird die Profildichtung 43 elastisch derart verformt, dass bei montierter Profildichtung 43 diese die Schutzscheibe 28 gegen die Seitenfläche 41 drückt. Ferner ist erkennbar, dass die Schutzscheibe 28 mit ihrer unteren Kante 48 auf dem Grund der Ausnehmung 34 des Profilstabes 16 aufliegt. Dieses Aufliegen der Schutzscheibe 28 auf dem Profilstab 16 erfolgt durch das Eigengewicht der Schutzscheibe 28. Wesentlich ist jedoch, dass die obere Kante 49 der Schutzscheibe 28 lediglich mit einem sehr geringen Spalt 51 zum Kern 35 hin beabstandet ist. Dieser Spalt 51 ist dermaßen bemessen, dass er gerade noch eine Montage der Schutzscheibe 28 innerhalb der Profilstäbe 16 ermöglicht, das heißt, dass zusätzlich zu den von den Profilstäben 16 und deren Montage herrührenden erforderlichen Montagetoleranzen keinerlei zusätzliche Toleranzen vorgesehen sind.

Als typisches Beispiel ist ein (Montage-) Spalt 51 von etwa einem Millimeter zu nennen, bei einer Nutweite der Ausnehmung 34 von 10 mm, einer Profilbreite der Profilstäbe 16 von 45mm und einer Dicke der Schutzscheibe 28 von 8 mm. Mittels einer derartigen Bemaßung der Profilstäbe 16 und der Schutzscheibe 28 ist es möglich, bei einer maximalen Scheibengröße von ca. 930x1290 mm eine Energie von ca. 520 J des Roboterarms 24 aufzunehmen bzw. zu absorbieren, wobei die Schutzscheibe 28 aus Makralon® besteht. Dabei wird ein Durchdringen des Roboterarms 24 durch das Gehäuse 15, und somit eine Gefährdung von außerhalb des Gehäuses 15 befindlichen Personen oder Materials ausgeschlossen.

Um weiterhin ein Aufspringen der Türen 31 nach außen hin zu verhindern ist es vorgesehen, die Türen 31 von außen her, d.h. von der dem Roboterarm 24 abgewandten Seite der Schutzscheibe 28 bzw. der Tür 31 mit einer im Ausführungsbeispiel gemeinsamen, vertikal angeordneten Strebe 53 auszustatten, welche an den Profilstäben 16 abnehmbar befestigt ist. Vorzugsweise ist die Strebe 53 nahe dem Verriegelungsmechanismus 32 bzw. relaiv weit entfernt zu den Scharnieren 33 am Gehäuse 15 angeordnet. Somit kann selbst bei einem Versagen der Verriegelungsmechanismen 32, welcher zu einem Aufspringen der Türen 31 führt, verhindert werden, dass der Roboterarm 24 die Türen 31 nach außen hin aufstößt.

Die soweit beschriebenen Montageeinrichtung 10 bzw. deren Gehäuse 15 kann in vielfältiger Weise abgewandelt bzw. modifiziert werden. Insbesondere ist eine Anpassung der Dicke der Schutzscheiben 28 an die aufzunehmende Energie des Roboterarms 24 sowie an die Fläche der Schutzscheibe 28 denkbar.

## Patentansprüche

1. Schutzraum für eine einen Roboterarm (24) aufweisende Montageeinrichtung (10), mit einem aus stabförmigen Profilstäben (16) zusammengesetzten Gehäuse (15), wobei die Profilstäbe (16) Ausnehmungen (34) zur Aufnahme von Scheibenelementen (28) haben, und wobei der maximal mögliche Bewegungsradius des Roboterarms (24) bis außerhalb des Gehäuses (15) reicht, sowie mit einer Einrichtung zum Verhindern des Ausschwenkens des Roboterarms (24) bis in einen Bereich außerhalb des Gehäuses (15), **dadurch gekennzeichnet, dass** die Einrichtung zum Verhindern des Ausschwenkens des Rotorarms (24) aus einer mit Ausnahme eines Montagespalts (51) spaltfreien Lagerung der Scheibenelemente (28) in den Ausnehmungen (34) der Profilstäbe (16) besteht, und dass zwischen den Scheibenelementen (28) und den Ausnehmungen (34) auf der dem Roboterarm (24) abgewandten Seite des Gehäuses (15) eine Dichtung (43) angeordnet ist, die die Scheibenelemente (28) gegen die der Dichtung (43) gegenüberliegende Seitenfläche (41) der Ausnehmung (34) drückt.

2. Schutzraum nach Anspruch 1, **dadurch gekennzeichnet, dass** die Dichtung (43) an allen in Wirkverbindung mit den Schutzscheiben (28) angeordneten Seiten der Profilstäbe (16) über jeweils deren gesamte Länge angebracht ist.

3. Schutzraum nach Anspruch 1 oder 2, **dadurch gekennzeichnet, dass** die Schutzscheiben (28) aus Makralon® bestehen und eine Dicke von 8mm aufweisen bei einer maximalen Größe einer Schutzscheibe (28) von 930x1290mm und einer Nutbreite der Ausnehmung (34) des Profilstabes (16) von 10mm.

4. Schutzraum nach einem der Ansprüche 1 bis 3, **dadurch gekennzeichnet, dass** das Gehäuse (15) wenigstens ein mittels Scharnieren (33) und eines Verriegelungsmechanimus (32) befestigtes Türelement (31) aufweist, welches nach der dem Roboterarm (24) abgewandten Seite zu öffnen ist, und dass am Gehäuse (15) auf der dem Roboterarm (24) abgewandten Seite wenigstens ein Strebenelement (53) abnehmbar befestigt ist, welches die Öffnungsbewegung des wenigstens einen Türelements (31) blockiert.

## Claims

1. Protective chamber for an installation arrangement (10) with a robot arm (24), having a housing (15) made up of profile bars (16), the profile bars (16) containing recesses (34) for accommodating panel elements (28), and the maximum possible movement radius of the robot arm (24) extending to outside the housing (15), and having a means for preventing the robot arm (24) from pivoting out into a region outside the housing (15), **characterized in that** the means for preventing the robot arm (24) from pivoting out comprises support for the panel elements (28) in the recesses (34) of the profile bars (16) which, with the exception of an installation gap (51), is gap-free, and **in that** a seal (43) is arranged between the panel elements (28) and the recesses (34) on that side of the housing (15) which is directed away from the robot arm (24), and this seal presses the panel elements (28) against the side surface (41) of the recess (34), this side surface being located opposite the seal (43).

2. Protective chamber according to Claim 1, **characterized in that** the seal (43) is fitted over the entire length of the profile bars (16) in each case on all the sides of the profile bars which are arranged in operative connection with the protection panels (28).

3. Protective chamber according to Claim 1 or 2, **characterized in that** the protection panels (28) consist of Makralon® and have a thickness of 8 mm, with a protection panel (28) having a maximum size of 930 x 1290 mm and the recess (34) of the profile bar (16) having a groove width of 10 mm.

4. Protective chamber according to one of Claims 1 to 3, **characterized in that** the housing (15) has at least one door element (31) which is fastened by means of hinges (33) and a locking mechanism (32) and can be opened towards the side which is directed away from the robot arm (24), and **in that** at least one strut element (53) is fastened in a removable manner on the housing (15), on the side which is directed away from the robot arm (24), and this strut element blocks the opening movement of the at least one door element (31).

## Revendications

1. Cellule de sécurité pour une installation de montage (10) équipée d'un bras de robot (24) comportant un caisson (15) formé de profilés (16) en forme de tiges, les profilés (16) ayant des cavités (34) pour recevoir des panneaux vitrés (28) et
le rayon de mouvement maximum possible du bras de robot (24) déborde du caisson (15), ainsi qu'une installation pour éviter le débattement du bras de rotor (24) jusque dans une région située à l'extérieur du caisson (15),
**caractérisée en ce que**
l'installation pour éviter le débattement du bras de robot (24) se compose du montage sans intervalle du panneau vitré (28) dans les cavités (34) du profilé (16) à l'exception d'un intervalle de montage (51) et les cavités (34), sur le côté du caisson (15) non tourné vers le bras de robot (24), comportent un joint (43) qui pousse le panneau vitré (28) contre la surface latérale (41) de la cavité (34) à l'opposé du joint (43).

2. Cellule de sécurité selon la revendication 1,
**caractérisée en ce que**
le joint (43) est installé sur toute la longueur de tous les côtés du profilé (16) coopérant avec les vitres de protection (28).

3. Cellule de sécurité selon la revendication 1 ou 2,
**caractérisée en ce que**
les vitres de protection (28) sont en Macralon® et ont une épaisseur de 8 mm pour une taille maximale d'une vitre de protection (28) de 930x1290 mm et une largeur de nervure de la cavité (34) du profilé (16) de 10 mm.

4. Cellule de sécurité selon l'une des revendications 1 à 3,
**caractérisée en ce que**
le caisson (15) comporte au moins un élément de portière (31) fixé par des charnières (33) et un mécanisme de verrouillage (32) et qui s'ouvre vers le côté opposé à celui du bras de robot (24) et le caisson (15) comporte sur le côté non tourné vers le bras de robot (24), au moins un élément d'entretoise (53) fixé de manière amovible, qui bloque le mouvement d'ouverture d'au moins un élément de porte (31).
